# FASCICULE DE BREVET EUROPEEN

(11) **EP 1 068 782 B1**
(45) Date de publication et mention de la délivrance du brevet: **17.12.2003**
(21) Numéro de dépôt: 00440207.9
(22) Date de dépôt: 05.07.2000
(51) Int. Cl.: A01B 73/02

(54) **Pulvérisateur agricole**
Scheibenegge
Disc harrow

(30) Priorité: 15.07.1999 FR 9909310
(43) Date de publication de la demande: 17.01.2001
(73) Titulaire: Kuhn-Huard S.A., 44142 Chateaubriant Cedex (FR)
(72) Inventeur: Gentilhomme, Guy, 44110 Louisfert (FR); Perret, Louis, 44110 Châteaubriant (FR); Sechet, Arnaud, 49450 Villedieu la Blouere (FR)
(74) Mandataire: Andres, Jean-Claude

(56) Documents cités:
- EP-A- 0 391 093
- EP-A- 0 903 067
- DE-C- 4 125 489
- US-A- 3 414 064
- US-A- 3 830 313
- US-A- 4 441 562

## Description

La présente invention se rapporte au domaine technique général du machinisme agricole et plus précisément au domaine du travail du sol. L'invention concerne une machine agricole du type pulvériseur.

On connaît par exemple des pulvériseurs agricoles selon le préambule de la revendication 1. Les trains d'outils sont susceptibles de prendre différentes positions vis-à-vis du châssis et notamment une position de transport et une position de travail. Dans la position de transport, les trains d'outils s'étendant sensiblement le long du châssis et sensiblement parallèlement à la direction d'avance.

A cet effet, les trains d'outils sont pivotés autour d'axes verticaux à l'aide d'un système de pivotement monté sur le châssis. Ceci permet à la machine de couvrir une bande de terre relativement large en position de travail, tout en respectant une largeur maximale bien inférieure à ladite bande pour le transport sur route. Une telle machine est par exemple décrite dans le document **FR-A 2 758 228.**

Ces machines bien connues présentent souvent un encombrement important, surtout en longueur lorsque les trains d'outils sont repliés en position de transport. Cet encombrement en longueur ne facilite pas les manoeuvres, lesquelles imposent ainsi un grand rayon de braquage. En outre, le châssis doit être relativement long et le chariot, situé par exemple à l'arrière dudit châssis, est très éloigné des trains d'outils. Un tel agencement rend le réglage de la profondeur de travail plus difficile. Il est évident que des trains d'outils plus longs, en comprenant par exemple davantage d'outils (du type disques), augmentent l'importance des inconvénients mentionnés ci-dessus. Ceci s'avère donc très gênant pour la conception des machines à grand gabarit.

Le document **US 4 441 562** décrit également un tel pulvériseur comportant une poutre centrale et deux trains d'outils. Lesdits trains d'outils sont disposés de part et d'autre de ladite poutre centrale, et ils sont liés à cette dernière au moyen d'une articulation respective d'axe vertical. Chaque train d'outils comporte à son tour une poutre intérieure et une poutre extérieure reliées entre elles au moyen d'une articulation respective d'axe horizontal.

Lors du transport, lesdits trains d'outils sont disposés perpendiculairement à une direction d'avance au moyen d'un vérin. Pour leur part, chaque poutre extérieure est repliée sur la poutre intérieure correspondante grâce à un autre vérin hydraulique. Ainsi l'encombrement en largeur dudit pulvériseur est réduit.

Le but de la présente invention vise donc à remédier à ces inconvénients et à réaliser une machine dont l'encombrement au transport est réduit tout en présentant une grande largeur de travail.

Le but de la présente invention est atteint à l'aide de la partie caractérisante de la revendication 1.

Le pulvériseur agricole conforme à l'invention comporte avantageusement un châssis constitué d'une poutre centrale pourvue d'ailerons latéraux sous lesquels sont montés les trains d'outils.

Le pulvériseur agricole comporte par exemple des moyens pour soulever ou abaisser le châssis par rapport au chariot. Ce dernier est avantageusement monté sur la partie arrière du châssis.

Selon une réalisation préférentielle du pulvériseur agricole conforme à l'invention les trains d'outils avant et/ou arrière présentent une section repliable.

Le pulvériseur agricole conforme à l'invention comporte par exemple deux trains d'outils arrière.

D'autres caractéristiques et avantages ressortiront plus en détails à la lecture de la description détaillée donnée ci-après à titre d'exemple et en référence aux figures, non limitatives, dans lesquelles :
- la **figure 1** représente une vue latérale d'un exemple de réalisation d'un pulvériseur agricole conforme à l'invention, en position de transport,
- la **figure 2** représente le pulvériseur agricole de la figure 1, en vue de dessus, et
- la **figure 3** représente un pulvériseur agricole conforme à l'invention en vue de dessus et en position de travail.

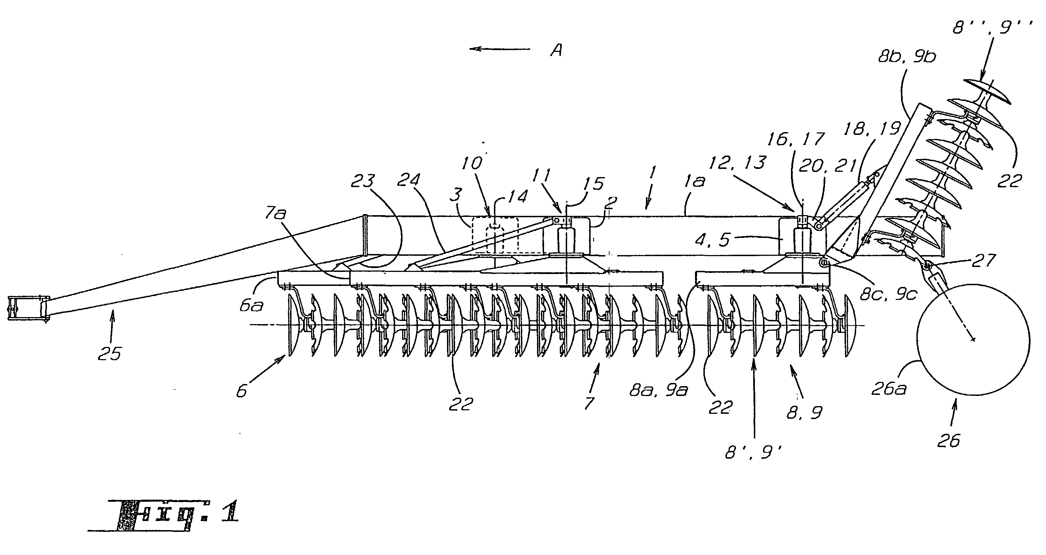

La figure 1 représente un mode de réalisation d'un pulvériseur agricole conforme à l'invention. Le pulvériseur agricole comporte un châssis (1) constitué d'une poutre centrale (1a) et d'ailerons latéraux (2, 3, 4, 5) s'étendant de part et d'autre de la poutre centrale (1a). Ces derniers supportent chacun un train d'outils (6, 7, 8, 9) respectif. La poutre centrale (1a) comporte par exemple deux ailerons latéraux avant (2, 3) et deux ailerons latéraux arrière (4, 5). Les ailerons latéraux avant (2, 3) sont avantageusement décalés l'un par rapport à l'autre dans la direction d'avance (A) du pulvériseur agricole.

Chaque train d'outils (6, 7, 8, 9) est constitué d'au moins une poutrelle (6a, 7a, 8a, 9a) montée sur l'aileron latéral (2, 3, 4, 5) correspondant à l'aide d'une articulation (10, 11, 12, 13) correspondante. Les articulations (10, 11, 12, 13) présentent chacun un axe (14, 15, 16, 17) sensiblement vertical, de manière à permettre un pivotement, dans un plan sensiblement horizontal, des trains d'outils (6, 7, 8, 9). Les moyens de pivotement prévus à cet effet, permettent ainsi de déplacer les trains d'outils (6, 7, 8, 9) entre une position de transport et au moins une position de travail, et inversement. Ces moyens de pivotement sont réalisés de façon connue et notamment avec un ou plusieurs vérins hydrauliques (non représentés). Le pulvériseur, conforme à l'invention et représenté aux figures, comporte par exemple deux trains d'outils avant (6, 7) et deux trains d'outils arrière (8, 9).

Dans l'exemple de réalisation représenté à la figure 1, les trains d'outils arrière (8, 9) montés sous les ailerons latéraux arrière (4, 5) sont constitués de deux sections (8'-8", 9'-9") assemblées avec une articulation supplémentaire (8c, 9c) autorisant un pivotement vers le haut de l'une (8", 9") desdites sections (8'-8", 9'-9"). Les trains d'outils arrière (8, 9) présentent donc une section repliable (8", 9").

Chaque train d'outils arrière (8, 9) présente également une poutrelle complémentaire (8b, 9b) articulée sur la poutrelle (8a, 9a) correspondante grâce à l'articulation supplémentaire (8c, 9c) correspondante. Cette dernière, du type cylindrique, s'étend donc de préférence dans un plan d'extension sensiblement horizontal. Des moyens de pivotement complémentaires sont prévus pour pivoter vers le haut l'une (8", 9") des sections (8'-8", 9'-9") du train d'outils arrière (8, 9) correspondant par rapport à l'autre section (8', 9') laquelle est articulée sous l'aileron latéral arrière (4, 5) correspondant. Les moyens de pivotement complémentaires permettent donc de pivoter, vers le haut, la poutrelle complémentaire (8b, 9b) vis-à-vis de la poutrelle (8a, 9a).

Ces moyens de pivotement complémentaires comprennent par exemple un vérin hydraulique (18, 19) monté entre la poutrelle complémentaire (8b, 9b) et une pièce (20, 21 ). Cette dernière est elle-même montée sur l'articulation (12, 13) et tourne avec le train d'outils (8, 9) lors du pivotement horizontal de ce dernier.

Un raccourcissement du vérin hydraulique (18, 19) permet donc de relever, vers le haut, la poutrelle complémentaire (8b, 9b).

Chaque train d'outils (6, 7, 8, 9) comporte un ou plusieurs assemblages de disques (22) montés sur la poutrelle (6a, 7a, 8a, 9a) ou sur la poutrelle complémentaire (8b, 9b) correspondante, dont le montage à l'aide d'un axe de rotation est connu.

Un bras de soutien (23, 24), reliant une partie tournante de l'articulation (10, 11) et la poutrelle (6a, 7a), est également prévu de manière à soutenir le train d'outils avant (6, 7), surtout lorsque l'axe (14, 15) d'articulation n'est pas localisé au voisinage du centre de gravité dudit train d'outils (6, 7).

La poutre centrale (1a) comporte également un timon d'attelage (25) et au moins une roue porteuse (26a). Cette dernière est montée sur la poutre centrale (1a) à l'aide de moyens de liaison susceptibles de pivoter autour d'un axe horizontal (27) et transversal à la direction d'avance (A).

Un tel pivotement, commandé par exemple hydrauliquement à l'aide d'un vérin hydraulique (non représenté), permet d'abaisser ou d'écarter les trains d'outils (6, 7, 8, 9) et la poutre centrale (1a) du sol. La roue (26a) peut avantageusement être remplacée par deux roues (26a) montées sur un chariot (26), tel que représenté aux figures. Le chariot (26) est avantageusement monté sur la partie arrière du châssis (1) ou de la poutre centrale (1a). Le chariot (26) est monté sur le châssis (1) de manière à prendre différentes positions vis-à-vis dudit châssis (1). Le pulvériseur conforme à l'invention comporte donc des moyens pour soulever et abaisser le châssis (1) supportant les trains d'outils (6, 7, 8, 9) par rapport au chariot (26).

Le pivotement, vers le haut, des poutrelles complémentaires (8b, 9b) permet de libérer de la place pour les roues (26a), lesquelles s'étendent chacune, durant le transport, au moins partiellement sous la section (8", 9") repliée du train d'outils arrière (8, 9) correspondant. Une telle position permet de soulever la poutre centrale (1a) et les trains d'outils (6, 7, 8, 9) pour le transport en pivotant le chariot (26) autour de l'axe horizontal (27).

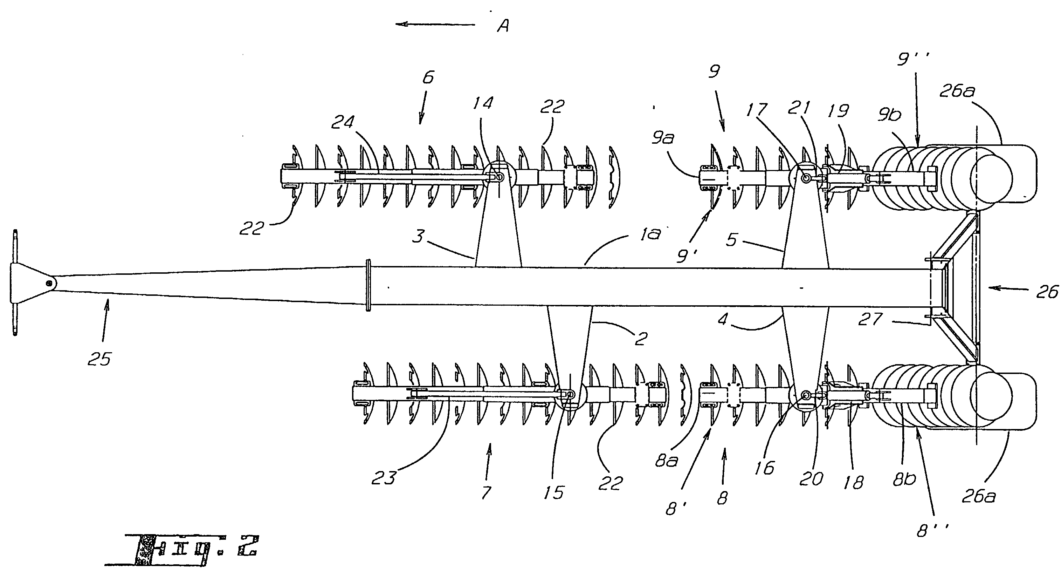

La figure 2 représente le pulvériseur agricole en vue de dessus et en position de transport.

Les poutrelles complémentaires (8b, 9b) sont repliées vers le haut et libèrent un espace occupé par les roues (26a). La longueur du pulvériseur peut ainsi être réduite grâce au pivotement vers le haut d'une section (8", 9") des trains d'outils arrière (8, 9).

Pour amener les trains d'outils (6, 7, 8, 9) d'une position de travail à une position de transport ou inversement, une commande hydraulique associée à des moyens hydrauliques adéquats peut être conçue. La commande hydraulique permet de commander quasi-simultanément un pivotement horizontal des poutrelles (6a, 7a, 8a, 9a) et un pivotement vertical des poutrelles complémentaires (8b, 9b). Un pivotement simultané ou différé du chariot (26) autour de l'axe horizontal (27) peut également être envisagé. Selon un autre exemple de réalisation, le repliage vertical des poutrelles complémentaires (8b, 9b) précède le pivotement horizontal des poutrelles (6a, 7a, 8a, 9a).

Selon un exemple additionnel de réalisation (non représenté) du pulvériseur agricole conforme à l'invention, il est également possible d'utiliser des trains d'outils avant (6, 7) présentant deux sections, dont l'une est repliable vers le haut. En repliant ou en pivotant ainsi la section localisée au voisinage du timon (25), on obtient une réduction complémentaire de la longueur du pulvériseur agricole en transport. Dans un tel cas de figure, le timon (25) peut être raccourci et la maniabilité du pulvériseur agricole se trouve améliorée davantage encore.

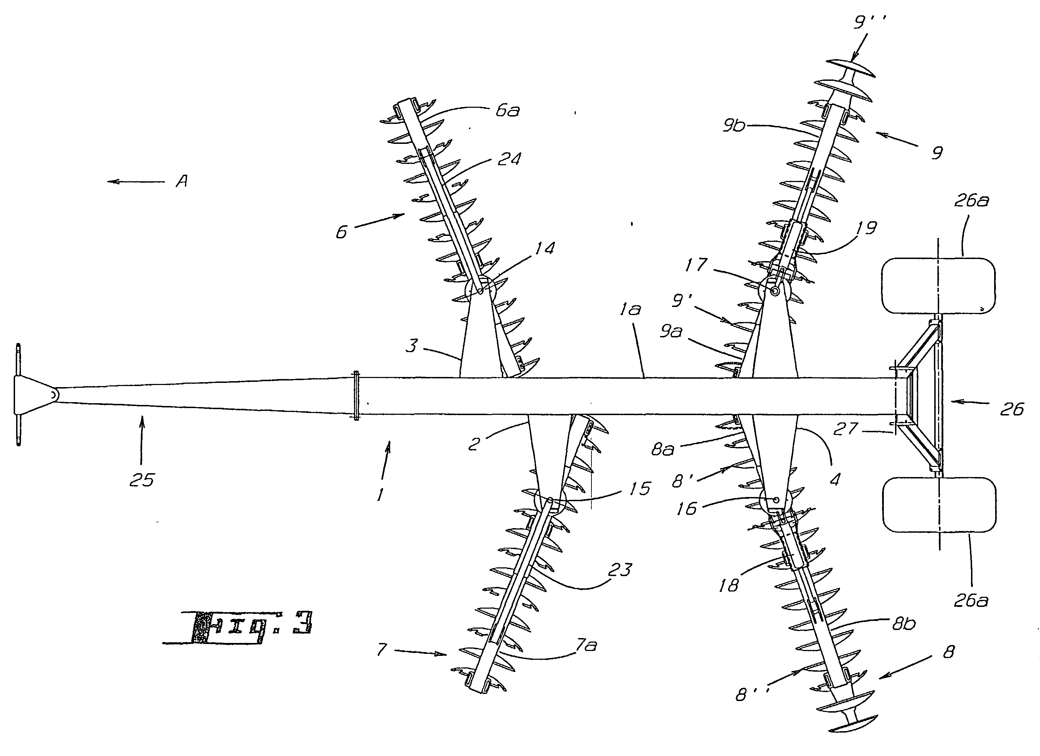

La figure 3 représente le pulvériseur agricole conforme à l'invention en position de travail. Les trains d'outils (6, 7, 8, 9) sont déployés sensiblement en X. Les poutrelles complémentaires (8b, 9b) sont abaissées de manière à s'aligner avec les poutrelles (8a, 9a) des trains d'outils (8, 9) correspondants.

Pour ne pas surcharger les figures, les moyens pour commander le positionnement du chariot (26) ou des roues (26a) vis-à-vis de la poutre centrale (1a) et les moyens de pivotement pour déplacer les trains d'outils (6, 7, 8, 9) dans un plan horizontal ne sont pas représentés. A titre d'exemple, ces moyens de pivotement comprennent au moins un vérin hydraulique.

Selon un autre mode de réalisation du pulvériseur agricole conforme à l'invention, la poutre centrale (1a) peut également être remplacée par un châssis (1) réalisé avec un assemblage de poutres.

D'autres modifications techniques apportées au pulvériseur représenté aux figures, ne sortent pas du cadre de la présente invention.

## Revendications

1. Pulvériseur agricole comportant:
- un châssis (1) supporté par un chariot (26),
- des trains d'outils (6, 7, 8, 9) montés pivotants sur le châssis (1) selon des axes (14, 15, 16, 17) sensiblement verticaux, et
- des moyens de pivotement pour déplacer les trains d'outils (6, 7, 8, 9) d'une position de travail vers une position de transport et inversement, lesdits trains d'outils (6, 7, 8, 9) étant disposés sensiblement parallèlement à la direction d'avance (A) dans la position de transport,
***caractérisé en ce* que** au moins certain desdits trains d'outils (6, 7, 8, 9) sont constitués de deux sections (8'-8", 9'-9") assemblées avec une articulation (8c, 9c) permettant, à l'aide de moyens de pivotement complémentaires, de pivoter vers le haut l'une (8", 9") des sections (8'-8", 9'-9") du train d'outils (8,9) correspondant pour réduire la longueur du pulvériseur en position de transport.

2. Pulvériseur agricole selon la revendication 1, ***caractérisé en ce* que** le châssis (1) est constitué d'une poutre centrale (la) pourvue d'ailerons latéraux (2, 3, 4, 5) sous lesquels sont montés les trains d'outils (6, 7, 8, 9).

3. Pulvériseur agricole selon la revendication 1 ou 2, ***caractérisé en ce* que** le chariot (26) est monté sur la partie arrière du châssis (1).

4. Pulvériseur agricole selon l'une quelconque des revendications 1 à 3, ***caractérisé en ce* que** le chariot (26) est monté sur le châssis (1) de manière à prendre différentes positions vis-à-vis dudit châssis (1).

5. Pulvériseur agricole selon l'une quelconque des revendications 1 à 4, ***caractérisé en ce* qu'**il comporte des moyens pour soulever ou abaisser le châssis (1) par rapport au chariot (26).

6. Pulvériseur agricole selon l'une quelconque des revendications 1 à 5, ***caractérisé en ce* qu'**il comporte deux trains d'outils avant (6, 7) et deux trains d'outils arrière (8, 9).

7. Pulvériseur agricole selon la revendication 6, ***caractérisé en ce* que** les trains d'outils arrière (8, 9) présentent une section repliable (8", 9").

8. Pulvériseur agricole selon la revendication 6 ou 7, ***caractérisé en ce* que** les trains d'outils avant (6, 7) présentent une section repliable.

9. Pulvériseur agricole selon l'une quelconque des revendications 1 à 8, ***caractérisé en ce* que** les moyens de pivotement comprennent au moins un vérin hydraulique.

10. Pulvériseur agricole selon l'une quelconque des revendications 1 à 9, ***caractérisé en ce* que** les moyens de pivotement complémentaires comprennent au moins un vérin hydraulique complémentaire (18, 19).

## Patentansprüche

1. Landwirtschaftliche Scheibenegge, die
- einen durch ein Fahrwerk (26) gestützten Rahmen (1),
- Werkzeugsätze (6, 7, 8, 9), die entlang im Wesentlichen vertikalen Achsen (14, 15, 16, 17) schwenkbar am Rahmen (1) angebracht sind, und
- Schwenkmittel zur Bewegung der Werkzeugsätze (6, 7, 8, 9) aus einer Arbeitsstellung in eine Transportstellung und umgekehrt, wobei die Werkzeugsätze (6, 7, 8, 9) in Transportstellung im Wesentlichen parallel zur Vorschubrichtung (A) angeordnet sind,
umfasst, ***dadurch gekennzeichnet,* dass** mindestens gewisse der Werkzeugsätze (6, 7, 8, 9) aus zwei Abschnitten (8'-8", 9'-9") bestehen, die mit einem Gelenk (8c, 9c) montiert sind, das mittels zusätzlichen Schwenkmitteln ein Nachobenschwenken des einen (8", 9") der Abschnitte (8'-8", 9'-9") des entsprechenden Werkzeugsatzes (8, 9) gestattet, um in Transportstellung die Länge der Scheibenegge zu verringern.

2. Landwirtschaftliche Scheibenegge nach Anspruch 1, ***dadurch gekennzeichnet,* dass** der Rahmen (1) aus einem mittleren Träger (1a) besteht, der mit seitlichen Flügeln (2, 3, 4, 5) versehen ist, unter denen die Werkzeugsätze (6, 7, 8, 9) angebracht sind.

3. Landwirtschaftliche Scheibenegge nach Anspruch 1 oder 2, ***dadurch gekennzeichnet*, dass** das Fahrwerk (26) am hinteren Teil des Rahmens (1) angebracht ist.

4. Landwirtschaftliche Scheibenegge nach irgend einem der Ansprüche 1 bis 3, **dadurch gekennzeichnet, dass** das Fahrwerk (26) so am Rahmen (1) angebracht ist, dass es verschiedene Positionen gegenüber dem Rahmen (1) einnehmen kann.

5. Landwirtschaftliche Scheibenegge nach irgend einem der Ansprüche 1 bis 4, ***dadurch gekennzeichnet,* dass** sie Mittel zum Anheben oder Absenken des Rahmens (1) bezüglich des Fahrwerks (26) aufweist.

6. Landwirtschaftliche Scheibenegge nach irgend einem der Ansprüche 1 bis 5, ***dadurch gekennzeichnet*, dass** sie zwei vordere Werkzeugsätze (6, 7) und zwei hintere Werkzeugsätze (8, 9) aufweist.

7. Landwirtschaftliche Scheibenegge nach Anspruch 6, ***dadurch gekennzeichnet*, dass** die hinteren Werkzeugsätze (8, 9) einen klappbaren Abschnitt (8", 9") aufweisen.

8. Landwirtschaftliche Scheibenegge nach Anspruch 6 oder 7, ***dadurch gekennzeichnet*, dass** die vorderen Werkzeugsätze (6, 7) einen klappbaren Abschnitt aufweisen.

9. Landwirtschaftliche Scheibenegge nach irgend einem der Ansprüche 1 bis 8, ***dadurch gekennzeichnet,* dass** die Schwenkmittel mindestens einen Hydraulikzylinder umfassen.

10. Landwirtschaftliche Scheibenegge nach irgend einem der Ansprüche 1 bis 9, ***dadurch gekennzeichnet,* dass** die zusätzlichen Schwenkmittel mindestens einen zusätzlichen Hydraulikzylinder (18, 19) umfassen.

## Claims

1. Agricultural disc harrow, comprising:
- a chassis (1) supported by a carriage (26),
- implement trains (6, 7, 8, 9) mounted pivotably on the chassis (1) according to substantially vertical axes (14, 15, 16, 17), and
- pivoting means for displacing the implement trains (6, 7, 8, 9) from a working position towards a transport position, and vice versa, the said implement trains (6, 7, 8, 9) being arranged substantially parallel to the direction of advance (A) in the transport position,
***characterized in* that** at least some of the said implement trains (6, 7, 8, 9) consist of two sections (8'-8", 9'-9") assembled by means of a joint (8c, 9c) making it possible, with the aid of complementary pivoting means, to pivot upwards one (8", 9") of the sections (8'-8", 9'-9") of the corresponding implement train (8, 9), in order to reduce the length of the disc harrow in the transport position.

2. Agricultural disc harrow according to Claim 1, ***characterized in* that** the chassis (1) consists of a central beam (1a) provided with lateral wings (2, 3, 4, 5), under which the implement trains (6, 7, 8, 9) are mounted.

3. Agricultural disc harrow according to Claim 1 or 2, ***characterized in* that** the carriage (26) is mounted on the rear part of the chassis (1).

4. Agricultural disc harrow according to any one of Claims 1 to 3, ***characterized in* that** the carriage (26) is mounted on the chassis (1) so as to assume different positions with respect to the said chassis (1).

5. Agricultural disc harrow according to any one of Claims 1 to 4, ***characterized in* that** it comprises means for raising or lowering the chassis (1) in relation to the carriage (26).

6. Agricultural disc harrow according to any one of Claims 1 to 5, ***characterized in* that** it comprises two front implement trains (6, 7) and two rear implement trains (8, 9).

7. Agricultural disc harrow according to Claim 6, ***characterized in* that** the rear implement trains (8, 9) have a foldable section (8", 9").

8. Agricultural disc harrow according to Claim 6 or 7, ***characterized in* that** the front implement trains (6, 7) have a foldable section.

9. Agricultural disc harrow according to any one of Claims 1 to 8, ***characterized in* that** the pivoting means comprise at least one hydraulic jack.

10. Agricultural disc harrow according to any one of Claims 1 to 9, ***characterized in* that** the complementary pivoting means comprise at least one complementary hydraulic jack (18, 19).
